# EUROPÄISCHE PATENTSCHRIFT

(11) **EP 2 919 945 B1**
(45) Veröffentlichungstag und Bekanntmachung des Hinweises auf die Patenterteilung: **07.09.2016**
(21) Anmeldenummer: 13792889.1
(22) Anmeldetag: 13.11.2013
(51) Int. Cl.: B25D 17/00, B23B 51/02, B23B 51/08, B25D 17/02, B25B 31/00

(54) **SETZWERKZEUG FÜR EINSCHLAGANKER**
SETTING TOOL FOR IMPACT ANCHOR BOLT
OUTIL DE POSE POUR BOULON D'ANCRAGE PAR ENFONCEMENT

(30) Priorität: 19.11.2012 DE 102012221114
(43) Veröffentlichungstag der Anmeldung: 23.09.2015
(73) Patentinhaber: Hilti Aktiengesellschaft, 9494 Schaan (LI)
(72) Erfinder: FOSER, Roland, FL-9494 Schaan (LI)
(74) Vertreter: Hilti Aktiengesellschaft Corporate Intellectual Property
(86) Internationale Anmeldenummer: PCT/EP2013/073712
(87) Internationale Veröffentlichungsnummer: WO 2014/076125

(56) Entgegenhaltungen:
- EP-A1- 0 425 358
- EP-A2- 0 955 130
- EP-A2- 1 281 481
- US-A- 5 030 043
- US-A1- 2006 228 181

## Beschreibung

Die vorliegende Erfindung betrifft ein Setzwerkzeug gemäß dem Oberbegriff des Anspruchs 1, zum maschinellen Setzen eines Einschlagankers in Gestein oder mineralische Bauwerkstoffe.

Der Einschlaganker hat an seiner Spitze einen kegelförmigen Spreizkörper und eine anfänglich lose auf dem Spreizkörper aufliegende Hülse. Der Anwender setzt den Einschlaganker mit der Spitze voraus in ein Bohrloch, dessen Innendurchmesser dem Durchmesser der Hülse entspricht. Die Hülse wird nun mittels Hammerschlägen auf den Spreizkörper in das Bohrloch getrieben und verklemmt dabei an der Bohrlochwand. Hilfsmittel zum Setzen des Einschlagankers sind in vielfältiger Weise bekannt. Unter Anderem beschreibt EP 0955130 A2 ein Setzwerkzeug gemäß dem Oberbegriff des Anspruchs 1, welches auf einer auf einen Bohrer aufgesetzten Haube basiert. Der Anwender bohrt zunächst das Bohrloch mit dem Bohrer und einer zugehörigen elektrischen Handwerkzeugmaschine mit Schlagfunktion. Die Leistungsfähigkeit des Bohrers des Setzwerkzeuges unterscheidet sich nicht von herkömmlichen Bohrern, insbesondere sind weder das Drehmoment oder die Schlagleistung beeinflusst. Danach stülpt der Anwender die Haube über den Bohrer. Die Haube stützt sich auf einer Schulter am Einsteckende des Bohrers ab. Die Spitze der Haube ist mit einer Schlagfläche versehen. Der Anwender nutzt die Schlagfunktion der Handwerkzeugmaschine und treibt die Hülse des Einschlagankers mittelbar durch den Bohrer und die Haube auf den Spreizkörper. Für die mehr Leistung fordernde Tätigkeit, d.h. das Bohren, wird das Setzwerkzeug in seiner einteiligen Konfiguration und die einfachere Tätigkeit in seiner zweiteiligen Konfiguration verwendet.

### OFFENBARUNG DER ERFINDUNG

Das erfindungsgemäße Setzwerkzeug hat einen ersten Teil zum Eintreiben eines Einschlagankers und einen auf den ersten Teil längs einer Achse aufsetzbaren zweiten Teil zum Bohren eines Bohrlochs für den Einschlaganker. Der erste Teil hat ein Einsteckende für eine schlagende Handwerkzeugmaschine, einen Stößel mit einer Schlagfläche und ein Stück einer Drehkupplung. Der zweite Teil hat eine den Stößel koaxial umschließende und an der Schlagfläche des Stößels anliegende Aufsteckhülse, ein Gegenstück zu der Drehkupplung und einen dauerhaft mit der Aufsteckhülse verbundenen Bohrer.

Das Setzwerkzeug invertiert die Anordnung des Bohrwerkzeugs und des Eintriebwerkzeugs gegenüber dem aus der EP 0955130 A2, ohne signifikante Einschränkungen hinsichtlich der Bohrleistung hinzunehmen. Der Kontakt des Stößels mit der Aufsteckhülse ermöglicht eine Durchleitung einer Schlagwelle von dem Einsteckende bis zu einer Spitze des Bohrers auf der Achse. Die Vermeidung von auf der Achse liegenden Hohlräumen erwies sich als notwendig.

Eine Ausgestaltung sieht vor, dass das erste Teil und das zweite Teil sich längs der Achse nur an der Schlagfläche des Stößels berühren. Das erste Teil berührt das zweite Teil mittels der auf der Achse liegenden Schlagfläche. Flächen des ersten Teils, welche radial außerhalb der Schlagfläche liegen, sind längs der Achse durch einen Spalt von dem zweiten Teil getrennt. Die Schlagwelle soll möglichst nur nahe der Achse, insbesondere nur innerhalb eines zur Achse koaxialen, zylindrischen Raums mit einem Querschnitt gleich, vorzugsweise gleich in Form und Flächeninhalt, der Schlagfläche laufen. Parasitäre Nebenkanäle werden längs der Achse durch den Spalt unterbrochen.

Eine Ausgestaltung sieht vor, dass die Aufsteckhülse einen den Bohrer radial überstehenden Bund ausbildet, welcher eine Bohrlochtiefe begrenzt. Eine Ausgestaltung sieht vor, dass das erste Teil einen das Einsteckende und den Stößel verbindenden Sockel aufweist, welcher mit einer in Schlagrichtung weisenden Stirnfläche den Stößel radial überragt, um eine Setztiefe zu begrenzen. Das Eintreibwerkzeug und das Bohrwerkzeug signalisieren dem Anwender durch Aufliegen an dem Untergrund das ordnungsgemäße Eintreiben bzw. Bohren.

Eine Ausgestaltung sieht vor, dass das Stück der Drehkupplung wenigstens eine Schlüsselfläche und das Gegenstück wenigstens eine zu der Schlüsselfläche komplementäre Schlüsselfläche aufweist.

Eine Ausgestaltung sieht vor, dass das Einsteckende wenigstens eine längs der Achse verlaufende längliche Nut aufweist, welche in Schlagrichtung und entgegen der Schlagrichtung geschlossen ist. Das Einsteckende ist besonders für eine schlagende Handwerkzeugmaschine geeignet.

Eine Ausgestaltung sieht vor, dass das erste Teil einen Sockel mit gleichem Außendurchmesser wie die Aufsteckhülse aufweist, und gekennzeichnet durch eine zylindrische Muffe aus einem elastischen Kunststoff, welche über das erste Teil und das zweite Teil gestülpt ist.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 ein Setzwerkzeug,
Fig. 2 einen Querschnitt durch das Setzwerkzeug,
Fig. 3 einen Querschnitt durch das Setzwerkzeug,

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

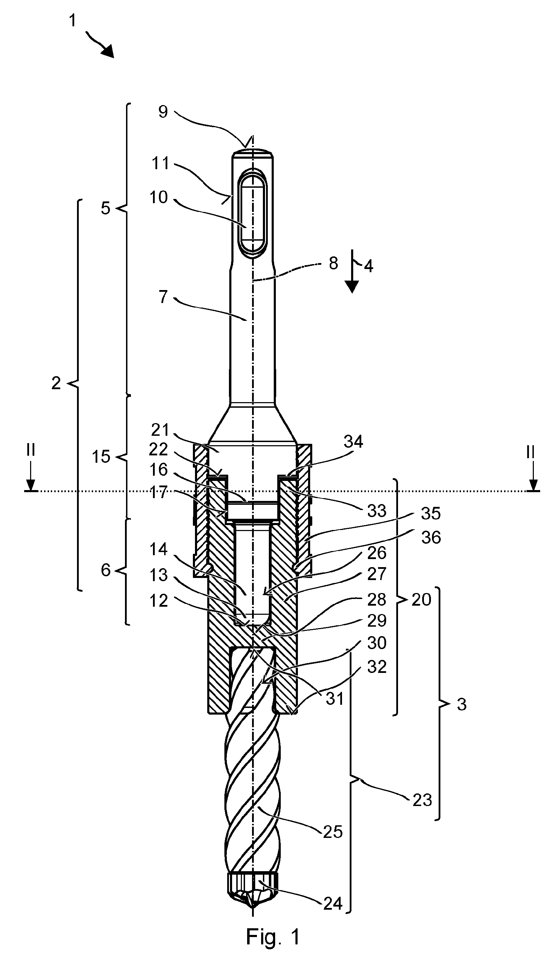

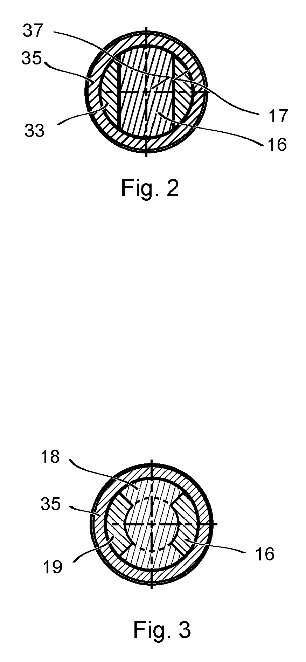

Fig. 1 zeigt ein Setzwerkzeug **1** in einer teilweise angeschnittenen Seitenansicht, Fig. 2 zeigt einen Querschnitt in der Ebene II-II. Das Setzwerkzeug hat ein erstes Teil **2** und ein zweites Teil 3, welche zusammengesteckt dargestellt sind. Nachfolgend ist erläutert, dass das zweite Teil 3 von dem ersten Teil **2** ohne Werkzeug abgezogen werden kann.

Das Setzwerkzeug **1** ist für Anker ausgelegt, die in ein passendes Bohrloch eingesetzt durch Eintreiben eines Spreizkörpers, Zapfens, Kegels etc., aufgespreizt und an der Bohrlochwand angeklemmt werden. Der Spreizkörper ist typischerweise an der in das Bohrloch eingeführten Spitze des Ankers, kann für das Setzwerkzeug **1** jedoch auch an dem aus dem Bohrloch herausragenden Ende angeordnet sein. Der Anwender nutzt für das Bohren des Bohrlochs das Setzwerkzeug **1** in seiner zusammengesteckten Form, wie in Fig. 1 dargestellt. Das Bohrloch wird mit einer elektrischen Handwerkzeugmaschine gebohrt. Für das Eintreiben des Ankers nutzt der Anwender nur das erste Teil **2,** wofür er das zweite Teil **3** zuvor von dem ersten Teil **2** abzieht. Die Handwerkzeugmaschine wird in einem vorzugsweise rein meißelnden alternativ in einen hammerbohrenden Betrieb umgeschaltet.

Das erste Teil **2** zum Eintreiben des Ankers hat in Schlagrichtung **4** aufeinanderfolgend ein im Wesentlichen zylindrisches Einsteckende 5 und einen im Wesentlichen zylindrischen Stößel **6.**

Das Einsteckende **5** ist für eine schlagende Handwerkzeugmaschine ausgelegt. Das Einsteckende **5** hat einen im Wesentlichen zylindrischen Schaft **7** mit einer zur Achse **8** koaxialen und entgegen der Schlagrichtung **4** weisenden Schlagfläche **9.** Eine Verriegelung der Handwerkzeugmaschine kann in die gegenüberliegende Längsnuten **10** im Schaft **7** eingreifen. Die Längsnuten **10** sind in Schlagrichtung **4** und entgegen der Schlagrichtung **4** geschlossen. Das Einsteckende **5** ist ferner mit Drehmitnahmenuten **11** versehen, welche bespielsweise um 90 Grad versetzt um die Achse **8** zu den Längsnuten **10** angeordnet sind. Die Drehmitnahmenuten **11** sind vorzugsweise entgegen der Schlagrichtung **4** offen.

Der Stößel **6** hat eine in Schlagrichtung **4** weisende Schlagfläche **12** an seiner Spitze **13.** Die Schlagfläche **12** ist koaxial zu der Achse **8** angeordnet. Die Form der Spitze **13** kann an den zu setzenden Anker angepasst sein. Die beispielhafte Schlagfläche **12** ist kuppelförmig gewölbt, andere Schlagflächen können ringförmig mit einer zentralen Vertiefung sein. Ein die Spitze **13** tragender Schaft **14** des Stößels 6 ist vorzugsweise zylindrisch oder prismatisch.

Der Stößel **6** ist mit dem Einsteckende **5** über einen zwischenliegenden Sockel **15** verbunden. Vorzugsweise sind die drei Komponenten materialschlüssig verbunden, insbesondere aus einem einzigen Rohling gefertigt.

Der Sockel **15** hat einen nicht-rotationsymmetrischen Abschnitt, welcher ein Stück **16** (eine Kupplungshälfte) einer Drehkupplung bildet. Die beispielhafte Ausführung hat zwei zur Achse **8** diametral gegenüberliegende ebene Schlüsselflächen **17.** Der Abschnitt kann prismatisch mit drei, vier, sechs oder eine anderen Zahl geradflächiger Schlüsselflächen versehen sein. Der Abschnitt kann ebenfalls einen sternförmigen Querschnitt aufweisen. Die Drehkupplung kann ebenfalls mittels axial vorstehender Klauen **18** an dem Sockel **15** gebildet sein, welche in entsprechende Klauen **19** der Aufsteckhülse **20** eingreifen (vgl. Querschnitt in der Ebene II-II dargestellt in Fig 3).

Der Sockel **15** kann einen ringförmigen Bund **21** aufweisen, der den Stößel **6** und das Stück **16** der Drehkupplung radial überragt. Der Bund **21** hat eine in Schlagrichtung **4,** d.h. dem zweiten Teil **3** zugewandte, und quer zu der Achse **8** verlaufende Stirnfläche **22.** Der Bund **21** unterstützt den Anwender beim Eintreiben des Ankers. Die Länge des Stößels **6,** d.h. die axiale Entfernung der Schlagfläche **12** bis zu der Stirnfläche **22** des Bunds **21,** ist gleich dem Setzweg für den Anker gewählt. Der Setzweg ist die relative Strecke für die der Spreizkörper und die Hülse des Ankers relativ zueinander verschoben werden müssen. Den ordnungsgemäß abgeschlossenen Setzvorgang erkennt der Anwender somit am Aufliegen des Bunds **21** am Untergrund.

Das zweite Teil **3** hat eine Aufsteckhülse **20** und einen Bohrer **23,** die beide koaxial zu der Achse **8** angeordnet sind.

Der dargestellte Bohrer **23** hat einen Bohrkopf **24** aus einem Hartmetall (gesintertem Karbid). Der vorzugsweise monolithische Bohrkopf **24** hat vier kreuzförmig angeordnete, in Schlagrichtung **4** weisende Schneiden, welche zusammenhängend aus dem Hartmetall gebildet sind. Die Schneiden können von einer Spitze aus geneigt zu dem Umfang des Bohrkopfs verlaufen. Entlang des Umfangs des Bohrkopfs **24** sind ebenfalls Schneidkanten vorgesehen, welche im Wesentlichen parallel zu der Achse **8** verlaufen. Der Bohrkopf **24** ist auf eine Wendel **25** aufgesetzt, beispielsweise angelötet oder geschweißt. Die Wendel **25** ist in der Aufsteckhülse **20** dauerhaft verankert. Der Bohrer **23** kann alternativ zu einem monolithischen Bohrkopf, der die gesamte Stirnfläche bildet, mit einer Schneidplatte aus Hartmetall versehen sein, die in einen Schlitz in der Wendel **25** eingesetzt ist.

Die beispielhafte Aufsteckhülse **20** ist ein zylindrischer oder prismatischer Körper, der einen Aufnahmeraum **26** für den Stößel **6** aufweist. Der Aufnahmeraum **26** ist koaxial zu der Achse **8** ausgebildet und entgegen der Schlagrichtung **4** offen. Eine vorzugsweise umfänglich geschlossene Außenwand **27** umgibt den Aufnahmeraum **26.** Die Außenwand **27** hat vorzugsweise eine zylindrische oder prismatische Außenkontur. Ein hohler Querschnitt des Aufnahmeraums **26** ist vorzugsweise komplementär zu dem Querschnitt des Stößels **6.** Der Stößel **6** ist vorzugsweise in dem Aufnahmeraum **26** mit geringem radialen Spiel geführt. Der Aufnahmeraum **26** ist in Schlagrichtung **4** durch eine Dachfläche **28** geschlossen. Die dargestellte Aufsteckhülse **20** hat ein quer zu der Außenwand **27** verlaufendes Schott **29,** welches die Dachfläche **28** definiert. Die Länge der Aufnahmeraums **26** ist im Verhältnis zu der Länge des Stößels **6** derart ausgelegt, dass der Stößel **6** mit seiner Schlagfläche **12** an der Dachfläche **28** des Aufnahmeraums **26** anliegt. Die Dachfläche **28** kann komplementär zu der Schlagfläche **12** ausgebildet sein, vorzugsweise um einen auf der Achse **8** liegenden Berührpunkt der Dachfläche **28** mit der Schlagfläche **12** zu gewährleisten. Hierdurch lässt sich eine besonders effiziente Übertragung der Stoßwelle von der Handwerkzeugmaschine auf das Einsteckende **5** ausgeübten Stoßwelle in den Bohrkopf **24** erreichen. Die Stoßwelle kann sich ungestört durch Hohlräume entlang der Achse **8** ausbreiten.

Die Aufsteckhülse **20** hat einen dem Aufnahmeraum **26** gegenüberliegenden Sitz **30,** in welchen der Bohrer **23** dauerhaft eingesetzt ist. Der Sitz **30** kann beispielsweise ein passgenauer Hohlraum für die Wendel **25** sein. Ein Boden **31** des Sitzes **30** ist durch das Schott **29** gebildet. Der Bohrer **23** liegt an dem Boden **31** auf, vorzugsweise berührt die Wendel **25** des Bohrers **23** den Boden **31** an einem auf der Achse **8** liegenden Punkt. Die Wendel **25** kann materialschlüssig, formschlüssig und auf andere geeignete Weise dauerhaft mit dem Sitz **30** verbunden sein.

Das Schott **29** erweist sich als vorteilhaft für die Herstellung des Setzwerkzeugs **1,** ist jedoch für die effiziente Übertragung der Stoßwelle nicht zwingend erforderlich. Der Aufnahmeraum **26** kann unmittelbar durch den Bohrer **23** abgeschlossen sein. Die entgegen der Schlagrichtung **4** weisende Bodenfläche der Wendel **25** bildet die Dachfläche **28.**

Ein Außendurchmesser der Aufsteckhülse **20** ist größer als der Wendeldurchmesser. Eine in Schlagrichtung **4** weisende Stirnfläche **32** der Aufsteckhülse **20** bildet einen Tiefenanschlag beim Bohren. Der axiale Abstand des Bohrkopfs **24** zu der Stirnfläche **32** ist auf die Länge des Ankers abgestimmt.

Die Aufsteckhülse **20** bildet das Gegenstück **33** (andere Kupplungshälfte) für die Drehkupplung mit dem ersten Teil **2.** Die Aufsteckhülse **20** umgreift das Stück **16** und hat eine dem Stück **16** komplementäre Innenkontur. Oder der Umfang der Aufsteckhülse **20** ist mit axial vorstehenden Klauen **19** versehen. Das Gegenstück **33** kann längs der Achse **8** unmittelbar vor dem Aufnahmeraum **26** angeordnet sein.

Eine entgegen der Schlagrichtung **4** weisende Stirnfläche der Aufsteckhülse **20** liegt der Stirnfläche **22** des Sockels **15** gegenüber. Die beiden Stirnflächen sind durch einen Spalt **34** voneinander getrennt. Der Spalt **34** ergibt sich durch die Dimensionierung der Länge des Aufnahmeraums **26** im Verhältnis zu der Länge des Stößels **6.** Der Spalt **34** unterbindet eine Übertragung der Stoßwelle in den radial äußeren Bereichen des Setzwerkzeugs **1,** insbesondere in der Außenwand **27** der Aufsteckhülse **20.** Die Drehkupplung ist ebenfalls so ausgelegt, dass das Stück **16** und das Gegenstück **33** einander nur in Umfangsrichtung berühren und längs der Achse **8** durch einen Spalt getrennt sind.

Eine Muffe **35** aus einem elastischen Kunststoff, z.B. einem synthetischen Kautschuk, verbindet kraftschlüssig das erste Teil **2** und das zweite Teil **3.** Die Muffe **35** ist vorzugsweise über die Aufsteckhülse **20** und den Sockel **15** gestülpt. Beispielsweise kann die Muffe **35** mit Noppen **36** in entsprechenden Vertiefungen an der Aufsteckhülse **20** befestigt sein. Die Muffe **35** steht entgegen der Schlagrichtung **4** ausreichend über die Aufsteckhülse **20** hinaus, um den Sockel **15** zu greifen. In der dargestellten Ausführungsform haben die Aufsteckhülse **20** und der Sockel **15** den gleichen Querschnitt, in alternativen Ausführungsformen kann der hohle Querschnitt der Muffe **35** längs der Achse **8** an Aufsteckhülse **20** und Sockel angepasst variieren. Der Anwender kann das erste Teil **2** von dem zweiten Teil **3** durch Ziehen entlang der Achse **8** unter Überwinden der radial wirkenden Klemm- und Reibkraft der Muffe **35** lösen. Analog kann der Anwender die beiden Teile **2, 3** entlang der Achse **8** zusammenschieben.

## Patentansprüche

1. Setzwerkzeug (1) bestehend aus einem ersten Teil (2) zum Eintreiben eines Einschlagankers und einem auf den ersten Teil längs einer Achse (8) aufsetzbaren zweiten Teil (3) zum Bohren eines Bohrlochs für den Einschlaganker, **dadurch gekennzeichnet, dass** der erste Teil (2) ein Einsteckende (5) für eine schlagende Handwerkzeugmaschine, einen Stößel (6) mit einer Schlagfläche (12) und ein Stück (16) einer Drehkupplung aufweist, und dass der zweite Teil (3) eine den Stößel (6) koaxial umschließende und an der Schlagfläche (12) des Stößels (6) anliegende Aufsteckhülse (20), ein Gegenstück (33) zu der Drehkupplung und einen dauerhaft mit der Aufsteckhülse (20) verbundenen Bohrer (23) aufweist.

2. Setzwerkzeug (1) nach Anspruch 1, **dadurch gekennzeichnet, dass** das erste Teil (2) und das zweite Teil (3) sich längs der Achse (8) nur an der Schlagfläche (12) des Stößels (6) berühren.

3. Setzwerkzeug (1) nach Anspruch 1 oder 2, **dadurch gekennzeichnet, dass** das erste Teil (2) das zweite Teil (3) mittels der auf der Achse (8) liegenden Schlagfläche (12) berührt und Flächen (22) des ersten Teils (2), welche radial außerhalb der Schlagfläche (12) liegen, sind längs der Achse (8) durch einen Spalt (34) von dem zweiten Teil (3) getrennt.

4. Setzwerkzeug (1) nach einem der vorhergehenden Ansprüche, **dadurch gekennzeichnet, dass** die Aufsteckhülse (20) einen den Bohrer (23) radial überstehenden Bund (32) ausbildet, welcher eine Bohrlochtiefe begrenzt.

5. Setzwerkzeug (1) nach einem der vorhergehenden Ansprüche, **dadurch gekennzeichnet, dass** das erste Teil (2) einen das Einsteckende (5) und den Stößel (6) verbindenden Sockel (15) aufweist, welcher mit einer in Schlagrichtung (4) weisenden Stirnfläche (22) den Stößel (6) radial überragt, um eine Setztiefe zu begrenzen.

6. Setzwerkzeug (1) nach einem der vorhergehenden Ansprüche, **dadurch gekennzeichnet, dass** das Stück (16) der Drehkupplung wenigstens eine Schlüsselfläche (17) und das Gegenstück wenigstens eine zu der Schlüsselfläche (17) komplementäre Schlüsselfläche (37) aufweist.

7. Setzwerkzeug (1) nach einem der vorhergehenden Ansprüche, **dadurch gekennzeichnet, dass** das Einsteckende (5) wenigstens eine längs der Achse (8) verlaufende längliche Nut (10) aufweist, welche in Schlagrichtung (4) und entgegen der Schlagrichtung (4) geschlossen ist.

8. Setzwerkzeug (1) nach einem der vorhergehenden Ansprüche, **dadurch gekennzeichnet, dass** das erste Teil (2) einen Sockel (15) mit gleichem Außendurchmesser wie die Aufsteckhülse (20) aufweist, und **gekennzeichnet durch** eine zylindrische Muffe (35) aus einem elastischen Kunststoff, welche über das erste Teil (2) und das zweite Teil (3) gestülpt ist.

## Claims

1. Setting tool (1) consisting of a first part (2) for driving in a drop-in anchor and a second part (3) that can be mounted on the first part along an axis (8) for drilling a hole for the drop-in anchor, **characterised in that** the first part (2) has an insertion end (5) for a percussive hand-held power tool, a plunger (6) with an impact surface (12) and a part (16) of a rotary coupling and that the second part (3) has a slip-on sleeve (20) coaxially surrounding the plunger (6) and bearing against the impact surface (12) of the plunger (6), a counterpart (33) to the rotary coupling and a drill bit (23) permanently connected to the slip-on sleeve (20).

2. Setting tool (1) according to claim 1, **characterised in that** the first part (2) and the second part (3) contact one another along the axis (8) only at the impact surface (12) of the plunger (6).

3. Setting tool (1) according to claim 1 or claim 2, **characterised in that** the first part (2) contacts the second part (3) by means of the impact surface (12) situated on the axis (8) and surfaces (22) of the first part (2) situated radially outside the impact surface (12) are separated from the second part (3) along the axis (8) by a gap (34).

4. Setting tool (1) according to one of the preceding claims, **characterised in that** the slip-on sleeve (20) forms a collar (32) projecting radially beyond the drill bit (23) and delimiting the depth of the drill hole.

5. Setting tool (1) according to one of the preceding claims, **characterised in that** the first part (2) has a base (15) connecting the insertion end (5) and the plunger (6) and projecting radially beyond the plunger (6) by means of an end face (22) pointing in the impact direction (4) in order to delimit the setting depth.

6. Setting tool (1) according to one of the preceding claims, **characterised in that** the part (16) of the rotary coupling has at least one key surface (17) and the counterpart has at least one key surface (37) complementary to the key surface (17).

7. Setting tool (1) according to one of the preceding claims, **characterised in that** the insertion end (5) has at least one elongated groove (10) extending along the axis (8) and closed in the impact direction (4) and in the opposite direction to the impact direction (4).

8. Setting tool (1) according to one of the preceding claims, **characterised in that** the first part (2) has a base (15) having the same outer diameter as the slip-on sleeve (20) and **characterised by** a cylindrical bushing (35) made of a flexible plastic placed over the first part (2) and the second part (3).

## Revendications

1. Outil de pose (1) constitué d'une première partie (2) pour enfoncer un ancrage à enfoncer et une seconde partie (3) pouvant être placée sur la première partie de long d'un axe (8) pour percer un trou pour l'ancrage à enfoncer,
**caractérisé en ce que** la première partie (2) comporte une extrémité d'enfoncement (5) pour un outil à percussion à main, un poussoir (6) avec une surface d'impact (12) et une pièce (16) d'un accouplement rotatif, et
**en ce que** la seconde partie (3) comporte un manchon à emboîter (20) entourant coaxialement le poussoir (6) et en contact avec la surface d'impact (12) du poussoir (6), une pièce (33) complémentaire de l'accouplement rotatif et une mèche (23) fixement reliée au manchon à emboîter (20).

2. Outil de pose (1) selon la revendication 1, **caractérisé en ce que** la première partie (1) et la seconde partie (3) sont en contact le long de l'axe (8) uniquement sur la surface d'impact (12) du poussoir (6).

3. Outil de pose (1) selon la revendication 1 ou 2, **caractérisé en ce que** la première partie (2) est en contact avec la seconde partie (3) au moyen de la surface d'impact (12) située sur l'axe (8), et des surfaces (22) de la première partie (2) qui sont radialement à l'extérieure de la surface d'impact (12), sont séparées de la seconde partie (3) le long de l'axe (8) par un espace (34).

4. Outil de pose (1) selon l'une des revendications précédentes, **caractérisé en ce que** le manchon à emboîter (20) forme une collerette (32) faisant radialement saillie à partir de la mèche (23), laquelle collerette délimite une profondeur de trou percé.

5. Outil de pose (1) selon l'une des revendications précédentes, **caractérisé en ce que** la première partie (2) comporte une douille (15) reliant l'extrémité d'enfoncement (5) et le poussoir (6), laquelle douille fait radialement saillie à partir du poussoir (6) avec une surface frontale (22) située dans la direction de percussion (4) afin de délimiter une profondeur de pose.

6. Outil de pose (1) selon l'une des revendications précédentes, **caractérisé en ce que** la pièce (16) de l'accouplement rotatif comporte au moins une surface de clé (17) et la pièce complémentaire comporte au moins une surface de clé (17) complémentaire à la surface de clé (17).

7. Outil de pose (1) selon l'une des revendications précédentes, **caractérisé en ce que** l'extrémité d'enfoncement (5) comporte au moins une rainure longitudinale (10) s'étendant le long de l'axe (8), laquelle rainure est fermée dans la direction de percussion (4) et dans la direction opposée à la direction de percussion (4).

8. Outil de pose (1) selon l'une des revendications précédentes, **caractérisé en ce que** la première partie (2) comporte une douille (15) ayant le même diamètre extérieur que le manchon à emboîter (20), et **caractérisé par** une douille cylindrique (35) constituée d'une matière plastique élastique qui est emboutie au-dessus de la première partie (2) et de la seconde partie (3).
